(19) Europäisches Patentamt / European Patent Office / Office européen des brevets

(11) **EP 4 636 431 A1**

(12) **EUROPEAN PATENT APPLICATION**
published in accordance with Art. 153(4) EPC

(43) Date of publication:
**22.10.2025 Bulletin 2025/43**

(21) Application number: **23919402.0**

(22) Date of filing: **02.11.2023**

(51) International Patent Classification (IPC):
**G01S 5/02** $^{(2010.01)}$

(52) Cooperative Patent Classification (CPC):
**H04W 64/003; G01C 21/20; G01S 5/02;
G01S 5/021; G01S 5/0242; G01S 19/46;
H04W 64/00**

(86) International application number:
**PCT/CN2023/129411**

(87) International publication number:
**WO 2024/159838 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.02.2023 CN 202310126956**

(71) Applicant: **Tencent Technology (Shenzhen)
Company Limited
Shenzhen, Guangdong 518057 (CN)**

(72) Inventors:
- **ZHOU, Chanxin
  Shenzhen, Guangdong 518057 (CN)**
- **LI, Xin
  Shenzhen, Guangdong 518057 (CN)**
- **LIU, Chang
  Shenzhen, Guangdong 518057 (CN)**
- **WANG, Pengsen
  Shenzhen, Guangdong 518057 (CN)**

(74) Representative: **Nederlandsch Octrooibureau
P.O. Box 29720
2502 LS The Hague (NL)**

(54) **POSITIONING METHOD AND APPARATUS, DEVICE, STORAGE MEDIUM, AND COMPUTER PROGRAM PRODUCT**

(57)    A positioning method includes: acquiring a plurality of sets of sample positioning data of an access point, each set of sample positioning data comprising a sample round-trip time (RTT)-based measured distance and a sample position of a terminal positioned by a satellite at a time when the terminal scans the access point (202); determining, for each one of the plurality of sets of sample positioning data, a first distance from the terminal to the access point according to an initial bias of the access point and the sample RTT-based measured distance in the each set of sample positioning data, thereby obtaining a first distance (204); determining a second distance from the terminal to the access point according to an initial location of the access point and the sample position of the terminal positioned by a satellite in the each set of sample positioning data, thereby obtaining a second distance set (206); constructing a target function about the access point according to the signal distances and the positioning distances respectively determined based on the plurality of sets of sample positioning data (208); and estimating a fixed bias of the RTT-based distance measurement of the access point and a fixed location of the access point according to the target function, the estimated fixed bias and the estimated fixed location being configured for positioning the terminal (210).

FIG. 2

**Description**

RELATED APPLICATION

This application claims priority to Chinese Patent Application No. 202310126956.5, filed with the China National Intellectual Property Administration on February 03, 2023, and entitled "POSITIONING METHOD AND APPARATUS, DEVICE, STORAGE MEDIUM, AND COMPUTER PROGRAM PRODUCT", which is incorporated herein by reference in its entirety.

FIELD OF THE TECHNOLOGY

This application relates to the field of computer technologies, and in particular, to a positioning method and apparatus, a computer device, a storage medium, and a computer program product.

BACKGROUND OF THE DISCLOSURE

With the development of computer technologies and Internet technologies, an indoor positioning technology may be used as an auxiliary positioning manner of satellite positioning in an indoor environment where a satellite signal is unavailable. This solves a problem that the satellite signal is relatively weak at a ground level and cannot penetrate a building, which hinders accurate positioning of a current terminal location.

Currently, a distance from a terminal to a nearby access point may be estimated based on an access signal obtained when the terminal scans the access point. However, positioning the terminal based on the distance further needs to acquire location information of the access point in advance. The location information of the access point is usually manually measured. The manual measurement workload is relatively large, and the measurement efficiency is relatively low.

SUMMARY

According to various embodiments of this application, a positioning method is provided. The method includes:

acquiring a plurality of sets of sample positioning data of an access point, each set of sample positioning data comprising a sample round-trip time (RTT)-based measured distance and a sample position of a terminal positioned by a satellite at a time when the terminal scans the access point;

determining, for each one of the plurality of sets of sample positioning data, a first distance from the terminal to the access point according to an initial bias of the access point and the sample RTT-based measured distance in the each set of sample positioning data, thereby obtaining a first distance set;

determining, for each set of sample positioning data, a second distance from the terminal to the access point according to an initial location of the access point and the sample position of the terminal positioned by a satellite in the each set of sample positioning data, thereby obtaining a second distance set; and

determining a target bias of the access point and a target location of the access point according to the first distance set and the second distance set, the target bias and the target location being configured to position the terminal.

A positioning apparatus is further provided. The apparatus includes:

an acquiring module, configured to acquire a plurality of sets of sample positioning data of a access point, each set of sample positioning data comprising a sample RTT-based measured distance and a sample position of a terminal positioned by a satellite at a time when the terminal scans the access point;

a first determining module, configured to determine, for each one of the plurality of sets of sample positioning data, a first distance from the terminal to the access point according to an initial bias of the access point and the sample RTT-based measured distance in the each set of sample positioning data, thereby obtaining a first distance set;

a second determining module, configured to determine, for each set of sample positioning data, a second distance from the terminal to the access point according to an initial location of the access point and the sample position of the terminal positioned by a satellite in the each set of sample positioning data, thereby obtaining a second distance set;

a constructing module, configured to construct a target function about the access point according to the first distance set and the second distance set respectively determined based on the plurality of sets of sample positioning data; and

an access point mining module, configured to determine a target bias of the access point and a target location of the access point according to the first distance set and the second distance set, the target bias and the target location being configured to position the terminal.

A computer device is further provided. The computer device includes a memory and a processor. The memory has computer-readable instructions stored therein, and the processor, when executing the computer-readable instructions, implements the operations of the foregoing positioning method.

A computer-readable storage medium is further provided. The computer-readable storage medium has computer-readable instructions stored therein. The computer-readable instructions, when executed by a processor, implement the operations of the foregoing positioning method.

A computer program product is further provided. The computer program product includes computer-readable instructions. The computer-readable instructions, when executed by a processor, implement the operations of the foregoing positioning method.

According to various embodiments of this application, a positioning method is provided. The method includes:

receiving a positioning request from a positioning requesting end, the positioning request carrying an access point set scanned by the positioning requesting end and an RTT-based measured distance from the positioning requesting end to each access point in the access point set;

querying for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data comprising a sample RTT-based measured distance and a sample position of a terminal positioned by a satellite when the terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample position of a terminal positioned by a satellite;

calibrating a corresponding RTT-based measured distance according to the fixed bias of the at least one access point, to obtain a signal distance from the positioning requesting end to the at least one access point; and

positioning the positioning requesting end based on the signal distance from the positioning requesting end to the at least one access point and the fixed location of the at least one access point.

A positioning apparatus is further provided. The apparatus includes:

a receiving module, configured to receive a positioning request from a positioning requesting end, the positioning request carrying an access point set scanned by the positioning requesting end and an RTT-based measured distance from the positioning requesting end to each access point in the access point set;

a querying module, configured to query for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data comprising a sample RTT-based measured distance and a sample position of a terminal positioned by a satellite when the terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample position of a terminal positioned by a satellite;

a calibrating module, configured to calibrate a corresponding RTT-based measured distance according to the fixed bias of the at least one access point, to obtain a signal distance from the positioning requesting end to the at least one access point; and

a positioning module, configured to position the positioning requesting end based on the signal distance from the positioning requesting end to the at least one access point and the fixed location of the at least one access point.

A computer device is further provided. The computer device includes a memory and a processor. The memory has computer-readable instructions stored therein, and the processor, when executing the computer-readable instructions, implements the operations of the foregoing positioning method.

A computer-readable storage medium is further provided. The computer-readable storage medium has computer-readable instructions stored therein. The computer-readable instructions, when executed by a processor, implement the operations of the foregoing positioning method.

A computer program product is further provided. The computer program product includes computer-readable instructions. The computer-readable instructions, when executed by a processor, implement the operations of the foregoing positioning method.

Details of one or more embodiments of this application are provided in the accompanying drawings and descriptions below. Other features, objectives, and advantages of this application become apparent from the description, the drawings, and the claims.

BRIEF DESCRIPTION OF THE DRAWINGS

To describe the technical solutions in the embodiments of this application more clearly, the following briefly describes the accompanying drawings required for describing the embodiments or the conventional technology. Apparently, the accompanying drawings in the following descriptions show merely some embodiments of this application, and those of ordinary skill in the art may still derive other drawings from these disclosed accompanying drawings without creative efforts.

FIG. 1 is a diagram of an application environment of a positioning method according to an embodiment.

FIG. 2 is a schematic flowchart of a positioning method according to an embodiment.

FIG. 3 is a schematic flowchart of determining each set of sample positioning data of a target access point according to an embodiment.

FIG. 4 is a schematic diagram of offline mining of an access point according to an embodiment.

FIG. 5 is a schematic diagram of a principle of trilateral positioning according to an embodiment.

FIG. 6 is a schematic diagram of online positioning based on access point information according to an embodiment.

FIG. 7 is a schematic flowchart of a positioning method according to another embodiment.

FIG. 8 is a structural block diagram of a positioning apparatus according to an embodiment.

FIG. 9 is a structural block diagram of a positioning apparatus according to another embodiment.

FIG. 10 is a diagram of an internal structure of a computer device according to an embodiment.

FIG. 11 is a diagram of an internal structure of a computer device according to another embodiment.

DESCRIPTION OF EMBODIMENTS

To make the objectives, technical solutions, and advantages of this application clearer, the following further describes this application in detail with reference to the accompanying drawings and the embodiments. The specific embodiments described herein are only used for explaining this application, and are not used for limiting this application.

Embodiments of this application involve the following concepts:

Access point: it refers to a device providing an Internet access function, which usually has a fixed location.

Wi-Fi: Wi-Fi devices deployed in markets, office buildings, and residential buildings provide an Internet access function.

Round-trip time (RTT): it indicates a total duration from a moment at which a transmitting end transmits data to a moment at which the transmitting end receives a confirmation from a receiving end. In the embodiments of this application, the transmitting end is a terminal, and the receiving end is an access point. For example, Wi-Fi RTT refers to a duration from a moment at which a terminal transmits a network request to a Wi-Fi device to a moment at which the terminal receives a response from the Wi-Fi device.

RTT-based distance measurement: it refers to a method in which a measured distance from a terminal to an access point is calculated as a half of a product of RTT and the speed of light, such as a Wi-Fi RTT-based measured distance, and it is also referred to as RTT ranging, which has a bias.

Fixed bias: when a terminal scans an access point, there is a systematic bias between an RTT-based measured distance from the terminal to the access point and an actual signal distance (also referred to as a signal distance). Such a systematic bias is mostly related to the access point, and is caused by a hardware difference of a chip set of the access point. For example, there is a fixed bias between an actual signal distance from a terminal to a Wi-Fi device and an RTT-based measured distance, which is a systematic bias that objectively exists in Wi-Fi RTT-based distance measurement and that is irrelevant to a size of the RTT-based measured distance.

Media access control (MAC) address: it refers to a unique identifier of a Wi-Fi device.

Globe positioning system (GPS): it refers to a satellite-based navigation system, and a basic principle of GPS is to measure a distance from a satellite with a known location to a receiver, and then position the receiver based on data of a plurality of satellites.

Positioning request: a positioning request includes information, such as Wi-Fi, Bluetooth, a base station, or a GPS, about a current location scanned by a terminal, and the positioning request is transmitted to a server end for positioning.

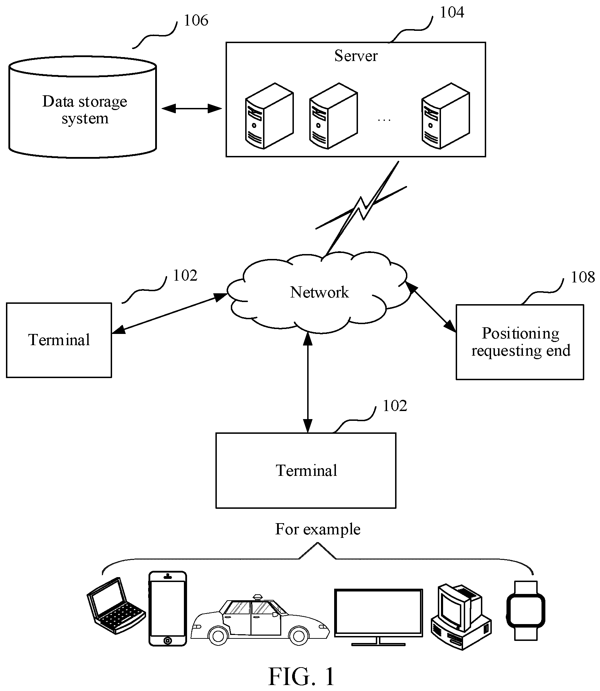

A positioning method provided in the embodiments of this application may be applied to an application environment shown in FIG. 1. In the figure, a terminal 102 communicates with a server 104 through a network. A data storage system may store data that needs to be processed by the server 104. The data storage system may be integrated on the server 104, or may be placed on a cloud or another server. The terminal 102 may be, but is not limited to, various personal computers, notebook computers, smartphones, tablet computers, Internet of Things devices, or portable wearable devices. The Internet of Thing device may be a smart speaker, a smart television, a smart air conditioner, a smart in-vehicle device, or the like. The portable wearable device may be a smart watch, a smart band, a head-mounted device, or the like. The embodiments of this application may be applied to various scenarios, including but not limited to, cloud technologies, artificial intelligence, intelligent transportation, assisted driving, and the like. The server 104 may be implemented as an independent server or a server cluster composed of a plurality of servers.

In an embodiment, a plurality of terminals 102 may all initiate positioning requests to the server 104. The server 104 constructs sample positioning data according to data carried in the positioning requests transmitted by the terminals 102. When the positioning requests initiated by the plurality of terminals 102 all carry information about a scanned target access point, the server 104 may construct a plurality of sets of sample positioning data of the target access point, and each set of sample positioning data includes a sample RTT-based measured distance and a sample satellite-based positioning location when the terminal scans the target access point. Then, the server 104 may determine, for each set of sample positioning data, a signal distance from the terminal to the target access point according to a fixed bias to be estimated of RTT-based distance measurement of the target access point and the sample RTT-based measured distance in the sample positioning data, and determine, for each set of sample positioning data, a positioning distance from the terminal to the target access point according to a fixed location to be estimated of the target access point and the sample satellite-based positioning location in the sample positioning data. Therefore, the server 104 may construct a target function about the target access point according to the signal distances and the positioning distances respectively determined based on the plurality of sets of sample positioning data, and estimate a fixed bias of the RTT-based distance measurement of the target access point and a fixed location of the target access point according to the target function. The estimated fixed bias and the estimated fixed location are configured for positioning the terminal.

In an embodiment, the application environment shown in FIG. 1 may further include the data storage system, namely, an access point database 106. In some embodiments, according to the foregoing manner, the server 104 may mine a corresponding fixed bias and a corresponding fixed location of each target access point disposed in a place such as a shopping mall, an office building, or a public place, and construct the access point database 106 according to the access point, as well as the corresponding fixed bias and the corresponding fixed location.

In an embodiment, the application environment shown in FIG. 1 may further include a positioning requesting end 108, and the positioning requesting end may be any one of the foregoing terminals 102, or may be another terminal device not belonging to the foregoing terminals 102. The positioning requesting end 108 may be, but is not limited to, various personal computers, notebook computers, smartphones, tablet computers, Internet of Things devices, or portable wearable devices. The Internet of Thing device may be a smart speaker, a smart television, a smart air conditioner, a smart in-vehicle device, or the like.

In an embodiment, the server 104 may receive a positioning request transmitted by the positioning requesting end 108, and the positioning request carries an access point set scanned by the positioning requesting end and an RTT-based measured distance from the positioning requesting end to each access point in the access point set. The server 104 may query the constructed access point database for a fixed bias of RTT-based distance measurement of at least one access point in the access point set and a fixed location of the at least one access point, calibrate a corresponding RTT-based measured distance according to the fixed bias of the at least one access point, to obtain a signal distance from the positioning requesting end to the at least one access point, and position the positioning requesting end 108 based on the signal distance from the positioning requesting end to the at least one access point and the fixed location of the at least one access point.

In a specific scenario, the positioning requesting end 108 provides a Wi-Fi connection function and supports an RTT protocol. In a case that the positioning requesting end enables the Wi-Fi function, when a positioning service is required, a current RTT-based measured distance from the positioning requesting end to each scanned Wi-Fi access point is obtained based on the RTT protocol. The positioning requesting end 108 may transmit a positioning request to the server 104 according to a currently scanned Wi-Fi identifier list and corresponding RTT-based measured distances. The server 104 queries, according to the Wi-Fi identifier list in the positioning request, an intersection set of the Wi-Fi identifier list and Wi-Fi identifiers in the access point database, positions the positioning requesting end 108 according to fixed locations and fixed biases of the intersection set, and feeds back a positioning result to the positioning requesting end 108.

The positioning method provided in the embodiments of this application, as described above, may be performed by the terminal 102 and the server 104 in cooperation, or may be performed by the terminal 102 alone. For example, after constructing the access point database, the server may store, to the terminal 102 locally, Wi-Fi information (an MAC address, as well as a corresponding fixed bias and a corresponding fixed location) stored in the access point database. Then, the following embodiments about online positioning may be locally implemented by the terminal 102.

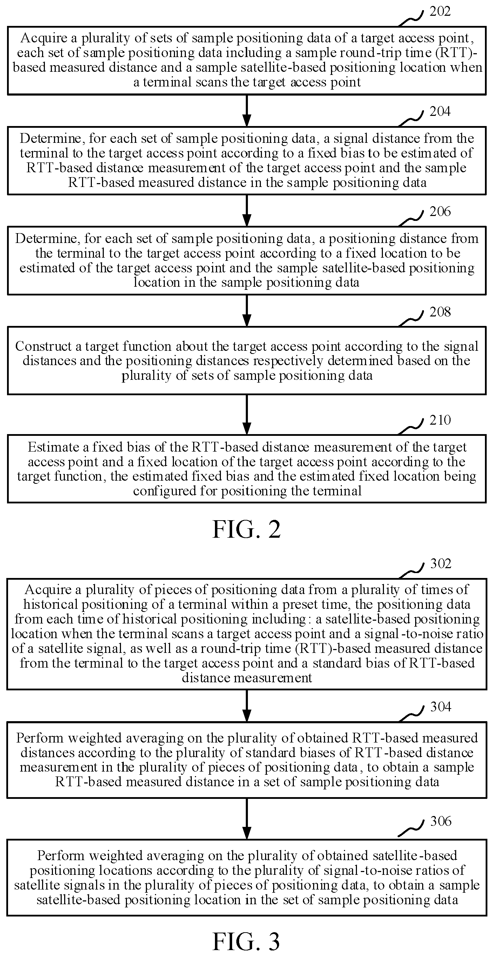

In an embodiment, as shown in FIG. 2, a positioning method is provided. A description is made by using an example in which the method is applied to the server 104 in FIG. 1. The method includes the following operations.

Operation 202: Acquire a plurality of sets of sample positioning data of an access point, each set of sample positioning data comprising a sample round-trip time (RTT)-based measured distance and a sample position of a terminal positioned by a satellite at a time when the terminal scans the access point; in embodiments of the present application, Operation 202 can also include following operations: Acquire a plurality of sets of sample positioning data of a target access point, each set of sample positioning data including a sample RTT-based measured distance and a sample satellite-based positioning location (namely, a sample position of a terminal positioned by a satellite) when a terminal scans the target access point.

The target access point is any access point supporting an RTT protocol. The target access point may be any access point disposed in a place such as a shopping mall, an office building, and a public place. For example, the access point is an access point providing a Wi-Fi access function. Any terminal providing a Wi-Fi function may access the target access point. The target access point usually has a fixed location. When scanning the target access point, the terminal may acquire an RTT-based measured distance from the terminal to the target access point. Because of a hardware difference of a chip set of the target access point, a fixed bias exists in RTT-based distance measurement.

The sample positioning data of the target access point may be configured for estimating a fixed bias of RTT-based distance measurement of the target access point and a fixed location of the access point. Each set of sample positioning data includes the sample RTT-based measured distance and the sample satellite-based positioning location when the terminal scans the target access point. The server may acquire the plurality of sets of sample positioning data of the target access point, to estimate the fixed bias and the fixed location of the target access point.

Each of the plurality of sets of sample positioning data may be generated by the server according to positioning data carried in positioning requests of different terminals. The positioning data includes a satellite-based positioning location when the terminal scans the target access point and a signal-to-noise ratio of a satellite signal, and further includes the RTT-based measured distance from the terminal to the target access point and a standard bias of the RTT-based distance measurement. That is, if the terminal and the target access point support the RTT protocol, the terminal acquires access signal data, namely, the RTT-based measured distance from the terminal to the target access point and the standard bias of the RTT-based distance measurement. If the terminal also enables a satellite positioning function and receives a satellite signal properly, the terminal acquires satellite signal data, namely, the satellite-based positioning location when the terminal scans the target access point and the signal-to-noise ratio of the satellite signal. The terminal may transmit a positioning request carrying the access signal data and the satellite signal data to the server. If the positioning request carries both the foregoing two signals, the server retains the positioning data, and otherwise discards the positioning data.

In some embodiments, the server may receive a positioning request initiated by the terminal when the terminal scans the target access point, and the positioning request carries positioning data. The server may construct a set of sample positioning data according to the positioning data carried in the positioning request. That is, a satellite-based positioning location that is carried in the positioning data and that is obtained when the terminal scans the target access point is directly taken as a sample satellite-based positioning location in the sample positioning data, and an RTT-based measured distance from the terminal to the target access point that is carried in the positioning data is directly taken as a sample RTT-based measured distance in the sample positioning data.

Due to the significant fluctuation and noise of the RTT-based measured distance obtained by the terminal, to improve data validity and accuracy, the server may further generate a set of sample positioning data according to positioning data respectively carried in a plurality of positioning requests initiated by a same terminal when the terminal scans the target access point within a preset duration. The preset duration refers to a relatively short period of time, and a location of the terminal usually does not change in this period of time. The preset duration may be, for example, 10 s, 20 s, or 30 s. For example, Terminal A initiates 5 positioning requests within 10 s, and the server may perform weighted averaging on 5 pieces of positioning data carried in the 5 positioning requests, to obtain a set of positioning sample data.

According to the foregoing manner, the server may generate a plurality of sets of sample positioning data of a same target access point according to a plurality of positioning requests initiated by a same terminal when the terminal scans the target access points in different periods of time. For example, a terminal 1 scans a same target access point in I different periods of time, each period of time lasts for 10 s, during scanning, 5 positioning requests are initiated in each period of time, and the server may obtain I sets of sample positioning data of the target access point.

According to the foregoing manner, the server may generate a plurality of sets of sample positioning data of a same target access point according to positioning requests initiated by different terminals when the terminals scan the target access point. For example, the terminal 1 initiates a positioning request when scanning the target access point in a period of time T1, and the server may generate a set of sample positioning data according to positioning data carried in the positioning request; a terminal 2 initiates a positioning request when scanning the target access point in a period of time T2, and the server may generate a set of sample positioning data according to positioning data carried in the positioning request; ...; and a terminal I initiates a positioning request when scanning the target access point in a period of time TI, and the server may generate a set of sample positioning data according to positioning data carried in the positioning request. In this way, the server may obtain I sets of sample positioning data of the target access point.

In an embodiment, the sample RTT-based measured distance in each set of sample positioning data may be calculated according to a plurality of RTT-based measured distance in a plurality of positioning requests, and the sample satellite-based positioning location in each set of sample positioning data may be calculated according to a plurality of satellite-based positioning locations in the plurality of positioning requests.

That is, as shown in FIG. 3, the operation of determining each set of sample positioning data of the target access point includes:

Operation 302: Acquire a plurality of pieces of positioning data from a plurality of times of historical positioning of the terminal within a preset time, the positioning data from each time of historical positioning including: a satellite-based positioning location when the terminal scans the target access point and a signal-to-noise ratio of a satellite signal, as well as an RTT-based measured distance from the terminal to the target access point and a standard bias of RTT-based distance measurement.

The plurality of times of historical positioning herein may be a plurality of times of historical positioning performed by a same terminal, or may be historical positioning respectively performed by different terminals. The target access point herein is a same target access point.

The server may receive a positioning request transmitted by the terminal, and each positioning request carries positioning data. The positioning data includes the satellite-based positioning location obtained by using a satellite positioning system when the terminal scans the target access point and the signal-to-noise ratio of the satellite signal, which are denoted as $(x\_g, y\_g, n\_g)$, where, $(x\_g, y\_g)$ indicates longitude and latitude coordinates, and $n\_g$ indicates the signal-to-noise ratio of the satellite signal. The positioning data further includes the RTT-based measured distance from the terminal to the target access point and the standard bias of the RTT-based distance measurement, which are denoted as $(r\_w, s\_w)$, where, $r\_w$ indicates the RTT-based measured distance from the terminal to the target access point when the terminal scans the target access point, and $s\_w$ indicates the standard bias of the RTT-based distance measurement. The existence of the standard bias is due to the fact that the RTT-based measured distance is actually an average value calculated based on a plurality of real-time RTT-based measured distances in a scanning process when the target access point is scanned this time. Therefore, there is a corresponding standard bias. The standard bias may reflect a discrete degree of the plurality of RTT-based measured distances, and accordingly, to a certain extent, reflects validity of the average value.

Operation 304: Perform weighted averaging on the plurality of obtained RTT-based measured distances according to the plurality of standard biases of RTT-based distance measurement in the plurality of pieces of positioning data, to obtain a sample RTT-based measured distance in a set of sample positioning data.

In an embodiment, the operation of performing weighted averaging on the plurality of obtained RTT-based measured distances according to the plurality of standard biases of RTT-based distance measurement in the plurality of pieces of positioning data, to obtain a sample RTT-based measured distance in a set of sample positioning data includes: a reciprocal of the standard bias of the RTT-based distance measurement in each piece of positioning data is taken as a weight of the corresponding RTT-based measured distance; the respective weights of the plurality of RTT-based measured distances are summed, to obtain a weight sum; weighted summation is performed on the plurality of obtained RTT-based measured distances according to the respective weights of the plurality of RTT-based measured distances, to obtain an RTT-based measured distance weighted sum; and a ratio of the RTT-based measured distance weighted sum to the weight sum is taken as the sample RTT-based measured distance in the set of sample positioning data.

For example, a plurality of obtained RTT-based measured distances and a plurality of standard biases in T pieces of positioning data are denoted as follows:

$$[(r\_w1,s\_w1), (r\_w2,s\_w2), ..., (r\_wT,s\_wT)].$$

The server may perform weighted averaging on the plurality of RTT-based measured distances according to the following formula, to obtain a sample RTT-based measured distance avr_rw in a set of sample positioning data:

$$avr\_rw = \frac{\frac{r\_w1}{s\_w1} + \frac{r\_w2}{s\_w2} +,...,+ \frac{r\_wT}{s\_wT}}{\frac{1}{s\_w1} + \frac{1}{s\_w2} +,...,+ \frac{1}{s\_wT}}.$$

The server may further average the plurality of standard biases according to the following formula, to obtain a sample standard bias:

$$avr\_sw = \frac{s\_w1 + s\_w2 +,...,+ s\_wT}{T}.$$

Operation 306: Perform weighted averaging on the plurality of obtained satellite-based positioning locations according to the plurality of signal-to-noise ratios of satellite signals in the plurality of pieces of positioning data, to obtain a sample satellite-based positioning location in the set of sample positioning data.

In an embodiment, the operation of performing weighted averaging on the plurality of obtained satellite-based positioning locations according to the plurality of signal-to-noise ratios of satellite signals in the plurality of pieces of positioning data, to obtain a sample satellite-based positioning location in the set of sample positioning data includes: a reciprocal of the signal-to-noise ratio of the satellite signal in each piece of positioning data is taken as a weight of a corresponding satellite-based positioning location; the respective weights of the plurality of satellite-based positioning locations are summed, to obtain a weight sum; weighted summation is performed on the plurality of obtained satellite-based positioning locations according to the respective weights of the plurality of satellite-based positioning locations, to obtain a satellite-based positioning location weighted sum; and a ratio of the satellite-based positioning location weighted sum to the weight sum is taken as the sample satellite-based positioning location in the set of sample positioning data.

For example, a plurality of obtained satellite-based positioning locations and a plurality of signal-to-noise ratios of satellite signals in T pieces of positioning data are denoted as: [(x_g1,y_gl,n_g1),(x_g2,y_g2,n_g2),...,(x_gT,y_gT,n_gT)]. The server may perform weighted averaging on the plurality of satellite-based positioning locations according to the following formula, to obtain a sample satellite-based positioning location (avr_x_g, avr_y-g) in a set of sample positioning data:

$$(avr\_x\_g, avr\_y\_g) = \frac{\frac{(x\_g3, y\_g3)}{n\_g1} + \frac{(x\_g2, y\_g2)}{n\_g2} +,...,+ \frac{(x\_gT, y\_gT)}{n\_gT}}{\frac{1}{n\_g1} + \frac{1}{n\_g2} +,...,+ \frac{1}{n\_gT}}.$$

8

The server may further average the plurality of signal-to-noise ratios of satellite signals according to the following formula, to obtain a sample signal-to-noise ratio:

$$avr\_n\_g = \frac{n\_g1 + n\_g2 +, ..., + n\_gT}{T}.$$

The foregoing weighted averaging manner can improve the validity and accuracy of the sample positioning data, and can further reduce a quantity of samples, whereby the efficiency of obtaining a fixed location and a fixed bias through subsequent calculation is improved.

According to this manner, the server may obtain the plurality of sets of sample positioning data of the target access point:

(*avr_r_w*(1),*avr_s_w*(1),*avr_x_*(1),*avr_y_*(1),*avr_n_g_*(1));    (*avr_r_w*(2),*avr_s_w*(2),*avr_x_*(2),*avr_y_*(2),*avr_n_g_*(2)); ... (*avr_r_w*(I),*avr_s_w*(I),*avr_x_*(I),*avr_y_*(I),*avr_n_g_*(I));

where, I indicates a quantity of the plurality of sets of sample positioning data.

Operation 204: Determine, for each one of the plurality of sets of sample positioning data, a first distance from the terminal to the access point according to an initial bias of the access point and the sample RTT-based measured distance in the each set of sample positioning data, thereby obtaining a first distance set; in embodiments of the present application, operation 204 can also include following operations: Determine, for each set of sample positioning data, a signal distance from the terminal to the target access point (namely, first distance) according to a fixed bias to be estimated of RTT-based distance measurement of the target access point and the sample RTT-based measured distance in the sample positioning data.

To estimate the fixed bias of the target access point, a model needs to be constructed based on the RTT-based measured distance and an actual signal distance, to introduce the fixed bias to be estimated into a subsequent target function. In an embodiment, a formula for constructing the model based on the RTT-based measured distance and the actual signal distance is as follows:

$$avr\_r\_w = k * avr\_r\_t + o;$$

where, *k* is an offset coefficient, which may be valued as 1, *avr_r_t* indicates the actual signal distance, and *o* indicates the fixed bias to be estimated of the access point. When *k* is 1, the actual signal distance from the terminal to the target access point is expressed as:

$$avr\_r\_t = avr\_r\_w\text{-}o.$$

That is, for each set of sample positioning data of the target access point, the server determines the actual signal distance from the terminal to the target access point according to the fixed bias to be estimated of the RTT-based distance measurement of the target access point and the sample RTT-based measured distance in the sample positioning data.

The formula for constructing the model based on the RTT-based measured distance and the actual signal distance is not limited to the foregoing formula, and other quadratic and cubic functions may be used for fitting.

Operation 206: determining, for each set of sample positioning data, a second distance from the terminal to the access point according to an initial location of the access point and the sample position of the terminal positioned by a satellite in the each set of sample positioning data, thereby obtaining a second distance set; in embodiments of the present application, operation 206 can also include following operations: determine, for each set of sample positioning data, a positioning distance from the terminal to the target access point (namely, second distance) according to a fixed location to be estimated of the target access point and the sample satellite-based positioning location in the sample positioning data.

A physical distance, also referred to as a positioning distance, from a target access point to a terminal may be obtained according to a fixed location of the target access point and a satellite-based positioning location of the terminal. Therefore, for each set of sample positioning data, the server may determine the positioning distance from the terminal to the target access point according to the fixed location to be estimated of the target access point and the sample satellite-based positioning location in the sample positioning data.

Operation 208: Construct a target function about the target access point according to the signal distances and the positioning distances respectively determined based on the plurality of sets of sample positioning data.

Operation 210: determining a target bias of the access point and a target location of the access point according to the first distance set (namely, signal distances) and the second distance set (namely, positioning distances), the target bias and the target location being configured to position the terminal; in embodiments of the present application, operation 210 can also include following operations: Estimate a fixed bias of the RTT-based distance measurement of the target access point and a fixed location of the target access point according to the target function, the estimated fixed bias and the estimated fixed location being configured for positioning the terminal.

Because both the signal distance and the positioning distance indicate an actual distance from the terminal to the target access point, a difference between the signal distance and the positioning distance needs to be as small as possible. Based on this idea, the server fits the signal distance by taking the positioning distance as a supervisory signal, that is, constructs the target function about the target access point according to the signal distances and the positioning distances respectively determined based on the plurality of sets of sample positioning data as described above, and calculates the fixed bias to be estimated and the fixed location to be estimated according to the target function, to obtain the fixed bias and the fixed location of the target access point.

In an embodiment, the operation of constructing a target function about the target access point according to the signal distances and the positioning distances respectively determined based on the plurality of sets of sample positioning data includes: for each set of sample positioning data, a distance difference between a corresponding signal distance and a corresponding positioning distance is calculated; and the target function is constructed according to the respective distance differences of the plurality of sets of sample positioning data.

The target function expresses the difference between the signal distance and the positioning distance. In some embodiments, the server may calculate the distance difference by minimum multiplication, to obtain the fixed location and the fixed bias of the target access point. In an embodiment, a distance difference calculated based on ith sample positioning data may be expressed by the following formula:

$$ dis\big[ \big( avr\_x\_g(i), avr\_y\_g(i) \big), (x,y) \big] - (avr\_r\_w(i)\text{-}o) , $$

where, $dis[(avr\_x\_g(i),avr\_y\_g(i)),(x,y)]$ indicates a distance from $(avr\_x\_g(i),avr\_y\_g(i))$ to $(x,y)$, $(x,y)$ indicates the fixed location to be estimated of the target access point, and o indicates the fixed bias to be estimated of the RTT-based distance measurement of the target access point.

In an embodiment, each set of sample positioning data further includes a sample standard bias of sample RTT-based distance measurement and a sample signal-to-noise ratio of the sample satellite-based positioning location. The operation of constructing the target function according to the respective distance differences of the plurality of sets of sample positioning data includes: for each set of sample positioning data, a sample loss of the sample positioning data is calculated according to a reciprocal of the sample standard bias and a reciprocal of the sample signal-to-noise ratio in the sample positioning data, and a square root of the distance difference; and the respective sample losses of the plurality of sets of sample positioning data are summed, to obtain the target function.

In an embodiment, the server may construct the target function according to the following formula:

$$ L = \sum_{i=0}^{I} \frac{1}{avr\_s\_w(i) \times avr\_n\_g(i)} \Big\| dis\big[ \big( avr\_x\_g(i), avr\_y\_g(i) \big), (x,y) \big] - (avr\_r\_w(i)\text{-}o) \Big\|_2 , $$

where, $\|\bullet\|_2$ indicates a square root of $(\bullet)$.

In the formula, a larger sample standard bias and a larger sample signal-to-noise ratio indicate lower stability of the sample positioning data, and smaller contribution to the target function. Therefore, weighting the distance difference based on the reciprocals of the sample standard bias and the sample signal-to-noise ratio can improve accuracy of the finally calculated fixed location and fixed bias.

After constructing the foregoing target function, the server performs least square solution by taking a value that minimizes the target function as a target, to obtain the fixed bias and the fixed location of the target access point.

According to the foregoing manner, for a target access point involved in a positioning request of a user, the server may determine a corresponding fixed location and a corresponding fixed bias, correspondingly store an access point identifier of the target access point, the corresponding fixed location, and the corresponding fixed bias, and construct an access point database.

In some cases, when the server detects a fixed location corresponding to a same access point identifier change greatly, it is likely that an access point is a movable access point, and the fixed location and a fixed bias that correspond to the access point identifier interfere with a positioning result if participating in online positioning. The server needs to delete the access point identifier, the corresponding fixed location, and the corresponding fixed bias from the access point database.

According to the foregoing positioning method, for each target access point, a plurality of sets of sample positioning data constructed based on historical positioning data of a plurality of terminals when the plurality of terminals scans the target access point is acquired, and the plurality of sets of sample positioning data is taken as a data basis for subsequently mining a fixed location of the target access point. Apparently, acquisition of the sample positioning data does not need any additional hardware device or software system, and does not need manual participation, whereby manpower costs of mining an access point location are reduced. To obtain a fixed location and a fixed bias of the target access point, for each set of sample positioning data, a positioning distance determined based on a sample satellite-based positioning location when the terminal scans the target access point and a fixed location to be estimated of the target access point is taken as a supervisory signal, a signal distance determined based on a sample RTT-based measured distance when the terminal scans the target access point and a fixed bias to be estimated of RTT-based distance measurement is taken as an estimated value, a target function about the target access point is constructed, and the fixed location and the fixed bias of the RTT-based distance measurement of the target access point are calculated according to the target function. In this way, the fixed location and the fixed bias of the target access point can be effectively and accurately mined based on existing big data without the need for manual measurement, whereby manpower measurement costs are significantly reduced. The fixed location and the fixed bias are used for a positioning service, such as an indoor positioning service or an outdoor positioning service integrating a satellite positioning result, whereby positioning accuracy can be improved.

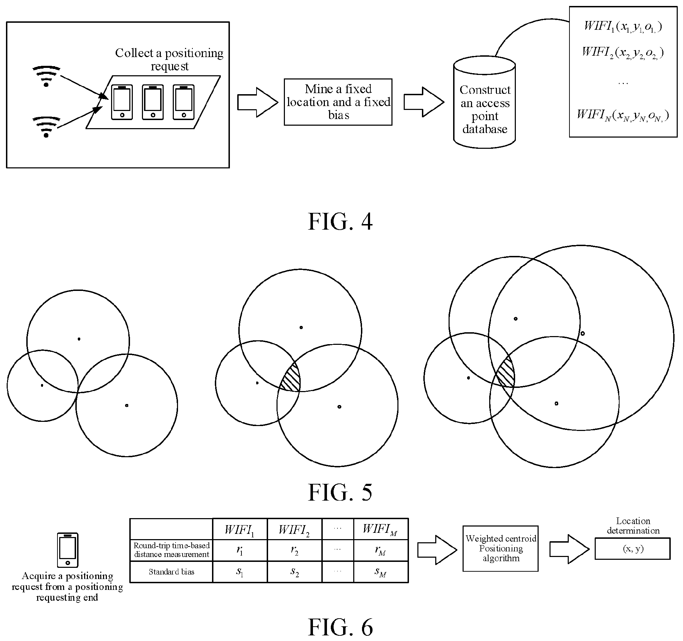

FIG. 4 is a schematic diagram of offline mining of an access point according to an embodiment. Refer to FIG. 4. A process of offline mining of an access point includes three operations: a positioning request of a user is collected, a fixed location and a fixed bias are mined, and an access point database is constructed. First, the server constructs sample positioning data based on positioning data carried in collected historical positioning requests of a plurality of terminals, and takes the sample positioning data as a data basis for a subsequent mining algorithm. Second, the server performs least square solution for a fixed location and a fixed bias of an access point according to the sample positioning data, to obtain a calculation result. Next, the server constructs an access point database based on the calculation result.

Specifically, for a target access point, when a historical positioning request is collected, if the terminal enables the Wi-Fi function, the access point supports the RTT protocol, and the terminal receives a GPS signal, the terminal generates a positioning request according to currently scanned access signal data and positioning signal data obtained by using GPS, and transmits the positioning request to the server. The server parses the positioning request. If the positioning request carries the foregoing two types of data, the foregoing two types of data in the positioning request are retained. If only one type of data is carried, the positioning request is deleted as an invalid sample. For T positioning requests that are initiated by a same terminal within a relatively short time and that are all valid samples, the server may construct a set of sample positioning data based on the foregoing two types of data respectively carried in the T positioning requests. That is, the server performs weighted averaging on a plurality of RTT-based measured distances, averages a plurality of standard biases of RTT-based distance measurement, performs weighted averaging on a plurality of satellite-based positioning locations, and averages a plurality of signal-to-noise ratios of satellite signals, to obtain a set of sample positioning data including a sample RTT-based measured distance, a sample standard bias, a sample satellite-based positioning location, and a sample signal-to-noise ratio. According to this manner, the server obtains a plurality of sets of sample positioning data of the target access point according to positioning requests of the plurality of terminals in a plurality of periods of time. In this process, after user authorization or permission is acquired, in a data collection process, a user is not required to provide any additional information or perform any additional operation, and any additional hardware device, software system, or the like is not needed. This ensures richness and validity of the sample positioning data, whereby validity of the finally mined fixed location and fixed bias is improved.

When the fixed location and the fixed bias are mined, a target function is constructed according to the plurality of sets of sample positioning data, and least square solution is performed by taking a value that minimizes the target function as a target, to obtain a fixed bias and a fixed location of the target access point.

When constructing the access point database, the server records an access point identifier of the target access point, the mined corresponding mined fixed location, and the mined corresponding fixed bias into the access point database. In this way, the serve can mine access point information of a large quantity of access points based on a user request.

In an embodiment, the method further includes: a positioning request is received from a positioning requesting end, the positioning request carrying an access point set scanned by the positioning requesting end and an RTT-based measured distance from the positioning requesting end to each access point in the access point set; a fixed bias and a fixed location of at least one access point in the access point set are queried; a corresponding RTT-based measured distance is calibrated according to the fixed bias of the at least one access point, to obtain a signal distance from the positioning requesting end to the at least one access point; and the positioning requesting end is positioned based on the signal distance from the positioning requesting end to the at least one access point and the fixed location of the at least one access point.

In this embodiment, the mined fixed bias and the mined fixed location of the access point are used for an online real-time positioning service. Specifically, the server may receive the positioning request initiated by the positioning requesting end. The positioning request may not include positioning signal data related to a GPS signal, or may include the positioning signal data related to the GPS signal.

In an application scenario, when the positioning requesting end is located in an indoor environment with a relatively weak GPS signal, the positioning request may not carry positioning signal data related to the GPS signal. In this case, accurate indoor positioning of the positioning requesting end can be implemented by the method. When the positioning requesting end is located in an outdoor environment with a relatively strong GPS signal, a positioning result obtained by the method may be integrated with a GPS positioning result, to optimize positioning precision and improve positioning experience of a user.

Specifically, the server obtains, according to a positioning request of the positioning requesting end, an access point set scanned by the positioning requesting end and an RTT-based measured distance from the positioning requesting end to each access point in the access point set. When querying for a fixed bias and a fixed location of at least one access point in the access point set, the server may perform querying according to an actual requirement. The server first determines an access point that is in the access point set and whose corresponding fixed location and fixed bias have been mined. In some embodiments, the server may position the positioning requesting end according to fixed biases and fixed locations of determined access points. In some embodiments, if a quantity of the determined access points is large, to improve positioning efficiency, the server may query only for fixed biases and fixed locations of several access points with relatively strong access signals among the determined access points, or the server may query only for fixed biases and fixed locations of several access points with relatively small standard biases of RTT-based distance measurement. Then, because a fixed bias exists in RTT-based distance measurement, the server calibrates corresponding RTT-based measured distances according to the queried fixed biases of the access points, to obtain a signal distance from the positioning requesting end to the at least one access point, and positions the positioning requesting end based on the signal distance from the positioning requesting end to the at least one access point and the fixed location of the at least one access point.

In an embodiment, the operation of querying for a fixed bias and a fixed location of at least one access point in the access point set includes: an intersection set of access point identifiers in the access point set and access point identifiers in the access point database is determined, the intersection set including at least one access point identifier; and according to an access point identifier in the intersection set, the access point database is queried for a fixed bias and a fixed location that correspond to the access point identifier.

Specifically, the server acquires, according to a current positioning request of the positioning requesting end, an access point set formed by access point identifiers of access points currently scanned by the positioning requesting end, and the server determines an intersection set of the access point set and the access point database. In some embodiments, to improve the positioning efficiency, a quantity of access point identifiers in the intersection set does not exceed M, M may be valued as 10, and when the quantity of the access point identifiers in the intersection set is greater than M, access point identifiers whose standard biases of RTT-based distance measurement are greater than a threshold are excluded.

In an embodiment, the operation of positioning the positioning requesting end based on the signal distance from the positioning requesting end to the at least one access point and the fixed location of the at least one access point includes: for each of the at least one access point, a reciprocal of the signal distance obtained after calibration is taken as a weight of the fixed location of the corresponding access point; the respective weights of the at least one access point are summed, to obtain a weight sum; weighted summation is performed on the corresponding fixed locations according to the respective weights of the fixed locations of the access points, to obtain a location weighted sum; and a ratio of the location weighted sum to the weight sum is taken as a positioning result of the positioning requesting end.

For example, a quantity of access points participating in positioning the positioning requesting end is M, corresponding RTT-based measured distances are respectively denoted as $r_{w1}, r_{w2}, ..., r_{wM}$, and queried fixed biases of the access points are respectively denoted as $o_1, o_2, ..., o_M$

Calibration is performed according to the following formula:

$$\tilde{r}_{tm} = r_{wm} - o_m;$$

signal distances obtained after calibration are respectively denoted as $\tilde{r}_{t1}, \tilde{r}_{t2}, ..., \tilde{r}_{tM}$;

queried fixed locations of the access points are respectively denoted as $(x_1, y_1), (x_2, y_2), ..., (x_M, y_M)$; and

centroid positioning is performed on the positioning requesting end based on the signal distances obtained after calibration:

$$(x,y) = \frac{\dfrac{(x_1,y_1)}{\tilde{r}_{t1}+\varepsilon} + \dfrac{(x_2,y_2)}{\tilde{r}_{t2}+\varepsilon} + \ldots + \dfrac{(x_M,y_M)}{\tilde{r}_{tM}+\varepsilon}}{\dfrac{1}{\tilde{r}_{t1}+\varepsilon} + \ldots + \dfrac{1}{\tilde{r}_{t2}+\varepsilon} + \ldots + \dfrac{1}{\tilde{r}_{tM}+\varepsilon}},$$

where, $\varepsilon$ is a very small number, such as 0.0001, and is configured for preventing the denominator from being 0.

In this embodiment, by using the foregoing centroid positioning algorithm in which weighted averaging is performed by taking the signal distance from the access point to the positioning requesting end as a weight, a smaller signal distance indicates a smaller distance from the positioning requesting end to the access point. Accordingly, a smaller distance is assigned a larger weight during statistics collection of the positioning result. In this way, positioning accuracy can be improved.

In an embodiment, the at least one access point includes at least three access points, and the operation of positioning the positioning requesting end based on the signal distance from the positioning requesting end to the at least one access point and the fixed location of the at least one access point includes:

for each of the at least three access points, a circle is drawn by taking a fixed location of the access point as a center and taking a signal distance obtained after calibration as a radius, to obtain at least three access point circles; and an intersection area of the at least three access point circles is taken as a positioning result of the positioning requesting end.

In this embodiment, the positioning requesting end may be positioned according to a trilateral positioning algorithm.

FIG. 5 is a schematic diagram of a principle of trilateral positioning. Refer to FIG. 5. At least two access points are needed for trilateral positioning. A circle is drawn by taking a fixed location of each access point as a center and taking a signal distance obtained after calibration as a radius, to obtain a plurality of access point circles. An intersection area of the access point circles is taken as a positioning result of the positioning requesting end, for example, a shaded region shown in FIG. 5.

FIG. 6 is a schematic diagram of online positioning based on access point information according to an embodiment. Refer to FIG. 6. The online positioning includes acquisition of access signal data of a positioning requesting end and weighted centroid positioning of the positioning requesting end. For acquisition of access point data of a positioning requesting end, the server may acquire access signal data of each access point scanned by the positioning requesting end, namely, an RTT-based measured distance and a standard bias of RTT-based distance measurement. For weighted centroid positioning of the positioning requesting end, the server queries for fixed biases and fixed locations of the access points, calibrates corresponding RTT-based measured distances based on the fixed biases, and performs weighted averaging on the fixed locations based on signal distances obtained after calibration, whereby centroid positioning of the positioning requesting end is realized.

For a manner for mining the fixed bias and the fixed location of the access point, in the embodiments of this application, a GPS signal is taken as supervisory information for the fixed bias of the RTT-based distance measurement. In another embodiment, a Bluetooth signal-based measured distance or an ultra-wideband (UWB) signal-based measured distance may be taken as supervisory information for mining the fixed location and the fixed bias of the access point.

In addition, the server may perform mining in another manner such as a support vector machine or a neural network. For example, a training sample of the neural network includes: a sample satellite-based positioning location, a sample RTT-based measured distance, and marked fixed biases and marked fixed locations of some known access points. The sample satellite-based positioning location and the sample RTT-based measured distance are inputted into the neural network, and the neural network is updated according to differences between predicted fixed biases and the marked fixed biases, as well as between predicted fixed locations and the marked fixed locations. For a new access point, prediction is directly performed by using the trained neural network, to obtain a corresponding fixed bias and a corresponding fixed location.

According to the embodiments of this application, the fixed location and the fixed bias of the access point are mined based on big data of a user without the need for any additional hardware or software system, whereby manpower measurement costs are significantly reduced. The mining method based on RTT-based distance measurement is more accurate compared to other mining methods. Furthermore, it enables real-time positioning of a user terminal with high accuracy, whereby positioning experience of the user is optimized. The method is applicable to both an indoor scenario and an outdoor scenario, demonstrating relatively high universality.

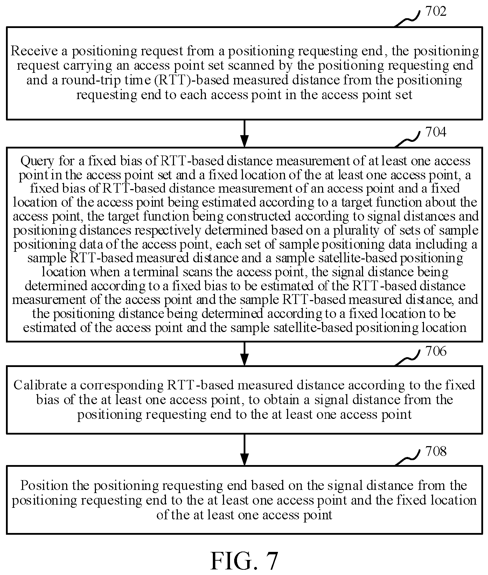

In an embodiment, as shown in FIG. 7, a positioning method is provided. A description is made by using an example in which the method is applied to a computer device (for example, the positioning requesting end 108 in FIG. 1). The method includes the following operations.

Operation 702: Receive a positioning request from a positioning requesting end, the positioning request carrying an access point set scanned by the positioning requesting end and an RTT-based measured distance from the positioning requesting end to each access point in the access point set.

Operation 704: Query for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data including a sample RTT-based measured distance and a sample satellite-based positioning location when a terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample satellite-based positioning location.

Operation 706: Calibrate a corresponding RTT-based measured distance according to the fixed bias of the at least one access point, to obtain a signal distance from the positioning requesting end to the at least one access point.

Operation 708: Position the positioning requesting end based on the signal distance from the positioning requesting end to the at least one access point and the fixed location of the at least one access point.

In an embodiment, before the operation of receiving a positioning request from a positioning requesting end, the method further includes: a plurality of sets of sample positioning data of a target access point is acquired, each set of sample positioning data including a sample RTT-based measured distance and a sample satellite-based positioning location when a terminal scans the target access point; for each set of sample positioning data, a signal distance from the terminal to the target access point is determined according to a fixed bias to be estimated of RTT-based distance measurement of the target access point and the sample RTT-based measured distance in the sample positioning data; for each set of sample positioning data, a positioning distance from the terminal to the target access point is determined according to a fixed location to be estimated of the target access point and the sample satellite-based positioning location in the sample positioning data; a target function about the target access point is constructed according to the signal distances and the positioning distances respectively determined based on the plurality of sets of sample positioning data; and a fixed bias and a fixed location of the target access point are determined according to the target function.

In an embodiment, the method further includes: for each target access point, an access point identifier of the target access point is acquired; and the access point identifier, the corresponding fixed bias, and the corresponding fixed location are correspondingly stored into an access point database.

In an embodiment, the operation of querying for a fixed bias of RTT-based distance measurement of at least one access point in the access point set and a fixed location of the access point includes: an intersection set of access point identifiers in the access point set and access point identifiers in the access point database is determined, the intersection set including at least one access point identifier; and according to an access point identifier in the intersection set, the access point database is queried for a fixed bias and a fixed location that correspond to the access point identifier.

In an embodiment, the operation of positioning the positioning requesting end based on the signal distance from the positioning requesting end to the at least one access point and the fixed location of the at least one access point includes: for each of the at least one access point, a reciprocal of the signal distance obtained after calibration is taken as a weight of the fixed location of the corresponding access point; the respective weights of the at least one access point are summed, to obtain a weight sum; weighted summation is performed on the corresponding fixed locations according to the respective weights of the fixed locations of the access points, to obtain a location weighted sum; and a ratio of the location weighted sum to the weight sum is taken as a positioning result of the positioning requesting end.

In an embodiment, the at least one access point includes at least three access points, and the operation of positioning the positioning requesting end based on the signal distance from the positioning requesting end to the at least one access point and the fixed location of the at least one access point includes: for each of the at least three access points, a circle is drawn by taking a fixed location of the access point as a center and taking a signal distance obtained after calibration as a radius, to obtain at least three access point circles; and an intersection area of the at least three access point circles is taken as a positioning result of the positioning requesting end.

For content related to the embodiments of the positioning method, refer to the foregoing descriptions.

In this embodiment, after the fixed location and the fixed bias of the target access point are effectively and accurately mined based on existing big data, the fixed location and the fixed bias of the access point may be queried during online positioning. Specifically, a positioning request is received from a positioning requesting end, and the positioning request carries an access point set scanned by the positioning requesting end and an RTT-based measured distance from the positioning requesting end to each access point in the access point set. For the access point set, a fixed bias and a fixed location of at least one access point may be queried based on an earlier accurate mining result of an access point location. A corresponding RTT-based measured distance is calibrated according to the fixed bias of the at least one access point, to obtain a signal distance from the positioning requesting end to the at least one access point. The positioning requesting end may be positioned based on the signal distance from the positioning requesting end to the at least one access point and the fixed location of the at least one access point, whereby positioning accuracy can be improved. Moreover, the positioning method is suitable for positioning in a single access point environment, and is suitable for indoor or outdoor positioning.

In a specific embodiment, a positioning method performed by a computer device may include the following operations:

1. a plurality of pieces of positioning data from a plurality of times of historical positioning of a terminal within a preset time is acquired, the positioning data from each time of historical positioning including: a satellite-based positioning location when the terminal scans a target access point and a signal-to-noise ratio of a satellite signal, as well as an RTT-based measured distance from the terminal to the target access point and a standard bias of RTT-based distance measurement;

2. a reciprocal of the standard bias of the RTT-based distance measurement in each piece of positioning data is taken as a weight of the corresponding RTT-based measured distance;

3. the respective weights of the RTT-based measured distances in the plurality of pieces of positioning data are summed, to obtain a first weight sum;

4. weighted summation is performed on the plurality of obtained RTT-based measured distances according to the respective weights of the RTT-based measured distances in the plurality of pieces of positioning data, to obtain an RTT-based measured distance weighted sum;

5. a ratio of the RTT-based measured distance weighted sum to the first weight sum is taken as a sample RTT-based measured distance in a set of sample positioning data;

6. a reciprocal of the signal-to-noise ratio of the satellite signal in each piece of positioning data is taken as a weight of the corresponding satellite-based positioning location;

7. the respective weights of the satellite-based positioning locations in the plurality of pieces of positioning data are summed, to obtain a second weight sum;

8. weighted summation is performed on the plurality of obtained satellite-based positioning locations according to the respective weights of the satellite-based positioning location in the plurality of pieces of positioning data, to obtain a satellite-based positioning location weighted sum;

9. a ratio of the satellite-based positioning location weighted sum to the second weight sum is taken as a sample satellite-based positioning location in the set of sample positioning data;

10. for each set of sample positioning data, a signal distance from the terminal to the target access point is determined according to a fixed bias to be estimated of the RTT-based distance measurement of the target access point and the sample RTT-based measured distance in the sample positioning data;

11. for each set of sample positioning data, a positioning distance from the terminal to the target access point is determined according to a fixed location to be estimated of the target access point and the sample satellite-based positioning location in the sample positioning data;

12. for each set of sample positioning data, a distance difference between the determined signal distance and the determined positioning distance is calculated;

13. a target function about the target access point is constructed according to the respective distance differences of the plurality of sets of sample positioning data;

14. a fixed bias and a fixed location of the target access point are determined according to the target function;

15. for each target access point, an access point identifier of the target access point is acquired;

16. the access point identifier, the corresponding fixed bias, and the corresponding fixed location are correspondingly stored into an access point database;

17. a positioning request is received from a positioning requesting end, the positioning request carrying an access point set scanned by the positioning requesting end and an RTT-based measured distance from the positioning requesting end to each access point in the access point set;

18. an intersection set of access point identifiers in the access point set and access point identifiers in the access point database is determined, the intersection set including at least one access point identifier;

19. according to an access point identifier in the intersection set, the access point database is queried for a fixed bias and a fixed location that correspond to the access point identifier;

20. a corresponding RTT-based measured distance is calibrated according to a fixed bias of at least one access point, to obtain a signal distance from the positioning requesting end to the at least one access point;

21. for each of the at least one access point, a reciprocal of the signal distance obtained after calibration is taken as a weight of a fixed location of the corresponding access point;

22. the respective weights of the at least one access point are summed, to obtain a third weight sum;

23. weighted summation is performed on the corresponding fixed locations according to the respective weights of the fixed locations of the access points, to obtain a location weighted sum; and

24. a ratio of the location weighted sum to the third weight sum is taken as a positioning result of the positioning requesting end.

According to the foregoing positioning method, for each target access point, a plurality of sets of sample positioning data constructed based on historical positioning data of a plurality of terminals when the plurality of terminals scans the target access point is acquired, and the plurality of sets of sample positioning data is taken as a data basis for subsequently mining a fixed location of the target access point. Apparently, acquisition of the sample positioning data does not need any additional hardware device or software system, and does not need manual participation, whereby manpower costs of mining an access point location are reduced. To obtain a fixed location and a fixed bias of the target access point, for each set of sample positioning data, a positioning distance determined based on a sample satellite-based positioning location when the terminal scans the target access point and a fixed location to be estimated of the target access point is taken as a supervisory signal, a signal distance determined based on a sample RTT-based measured distance when the terminal scans the target access point and a fixed bias to be estimated of RTT-based distance measurement is taken as an estimated value, a target function about the target access point is constructed, and the fixed location and the fixed bias of the RTT-based distance measurement of the target access point are calculated according to the target function. In this way, the fixed location and the fixed bias of the target access point can be effectively and accurately mined based on existing big data without the need for manual measurement, whereby manpower measurement costs are significantly reduced. The fixed location and the fixed bias are used for a positioning service, such as an indoor positioning service or an outdoor positioning service integrating a satellite positioning result, whereby positioning accuracy can be improved.

After the fixed location and the fixed bias of the target access point are effectively and accurately mined based on the existing big data, the fixed location and the fixed bias of the access point may be queried during online positioning. Specifically, a positioning request is received from a positioning requesting end, and the positioning request carries an access point set scanned by the positioning requesting end and an RTT-based measured distance from the positioning requesting end to each access point in the access point set. For the access point set, a fixed bias and a fixed location of at least one access point may be queried based on an earlier accurate mining result of an access point location. A corresponding RTT-based measured distance is calibrated according to the fixed bias of the at least one access point, to obtain a signal distance from the positioning requesting end to the at least one access point. The positioning requesting end may be positioned based on the signal distance from the positioning requesting end to the at least one access point and the fixed location of the at least one access point, whereby positioning accuracy can be improved. Moreover, the positioning method is suitable for positioning in a single access point environment, and is suitable for indoor or outdoor positioning.

The operations in the flowcharts involved in the foregoing embodiments are displayed in sequence based on indication of arrows, but the operations are not necessarily performed sequentially according to a sequence indicated by the arrows. Unless otherwise explicitly specified in this application, the sequence of the operations is not strictly limited, and the operations may be performed in other sequences. In addition, at least some operations in the flowcharts involved in the foregoing embodiments may include a plurality of operations or a plurality of stages, and the operations or stages are not necessarily performed at a same moment, and may be performed at different moments. The operations or stages are not necessarily performed in sequence, and may be performed in turns or alternately with other operations, or at least a part of operations or stages in the other operations.

Based on a same inventive concept, embodiments of this application further provide a positioning apparatus configured to implement the foregoing positioning method. An implementation solution provided by the apparatus for resolving a problem is similar to the implementation solution recorded in the foregoing method. Therefore, for specific limitations on one or more following embodiments of the positioning apparatus, refer to the limitations on the foregoing positioning method. Details are not described herein again.

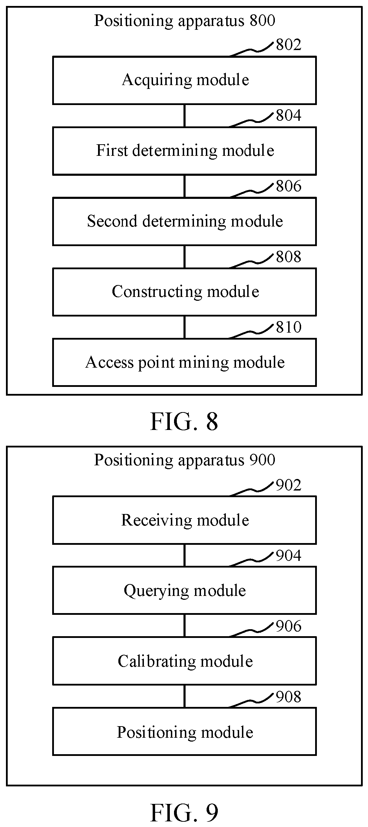

In an embodiment, as shown in FIG. 8, a positioning apparatus 800 is provided, which includes: an acquiring module 802, a first determining module 804, a second determining module 806, a constructing module 808, and an access point mining module 810.

The acquiring module 802 is configured to acquire a plurality of sets of sample positioning data of a access point, each set of sample positioning data comprising a sample RTT-based measured distance and a sample position of a terminal positioned by a satellite at a time when the terminal scans the access point; in embodiments of the present application, the acquiring module 802 can be further configured to acquire a plurality of sets of sample positioning data of a target access point, each set of sample positioning data including a sample RTT-based measured distance and a sample satellite-based positioning location when a terminal scans the target access point.

The first determining module 804 is configured to determine, for each one of the plurality of sets of sample positioning data, a first distance from the terminal to the access point according to an initial bias of the access point and the sample RTT-based measured distance in the each set of sample positioning data, thereby obtaining a first distance set; in embodiment of the present application, the first determining module 804 can further be configured to determine, for each set of sample positioning data, a signal distance from the terminal to the target access point according to a fixed bias to be estimated of RTT-based distance measurement of the target access point and the sample RTT-based measured distance in the sample positioning data.

The second determining module 806 is configured to determine, for each set of sample positioning data, a second distance from the terminal to the access point according to an initial location of the access point and the sample position of the terminal positioned by a satellite in the each set of sample positioning data, thereby obtaining a second distance set; in embodiments of the present application, the second determining module 806 can further be configured to determine, for each set of sample positioning data, a positioning distance from the terminal to the target access point according to a fixed location to be estimated of the target access point and the sample satellite-based positioning location in the sample positioning data.

The constructing module 808 is configured to construct a target function about the access point according to the first distance set and the second distance set respectively determined based on the plurality of sets of sample positioning data; in embodiments of the present application, the constructing module 808 can further be configured to construct a target function about the target access point according to the signal distances and the positioning distances respectively determined based on the plurality of sets of sample positioning data.

The access point mining module 810 is configured to determine a target bias of the access point and a target location of the access point according to the first distance set and the second distance set, the target bias and the target location being configured to position the terminal; in embodiments of the present application, the access point mining module 810 can further be configured to estimate a fixed bias of the RTT-based distance measurement of the target access point and a fixed location of the target access point according to the target function, the estimated fixed bias and the estimated fixed location being configured for positioning the terminal.

In an embodiment, the positioning apparatus 800 further includes:

a sample collecting module, configured to acquire a plurality of pieces of positioning data from a plurality of times of historical positioning of the terminal within a preset time, the positioning data from each time of historical positioning including: a satellite-based positioning location when the terminal scans the target access point and a signal-to-noise ratio of a satellite signal, as well as an RTT-based measured distance from the terminal to the target access point and a standard bias of the RTT-based distance measurement; perform weighted averaging on the plurality of obtained RTT-based measured distances according to the plurality of standard biases of RTT-based distance measurement in the plurality of pieces of positioning data, to obtain a sample RTT-based measured distance in a set of sample positioning data; and perform weighted averaging on the plurality of obtained satellite-based positioning locations according to the plurality of signal-to-noise ratios of satellite signals in the plurality of pieces of positioning data, to obtain a sample satellite-based positioning location in the set of sample positioning data.

In an embodiment, the sample collecting module is configured to take a reciprocal of the standard bias of the RTT-based distance measurement in each piece of positioning data as a weight of the corresponding RTT-based measured distance; calculate a weight sum of the respective weights of the plurality of RTT-based measured distances; perform weighted summation on the plurality of obtained RTT-based measured distances according to the respective weights of the plurality of RTT-based measured distances, to obtain an RTT-based measured distance weighted sum; and take a ratio of the RTT-based measured distance weighted sum to the weight sum as the sample RTT-based measured distance in the set of sample positioning data.

In an embodiment, the sample collecting module is configured to take a reciprocal of the signal-to-noise ratio of the satellite signal in each piece of positioning data as a weight of the corresponding satellite-based positioning location; calculate a weight sum of the respective weights of the plurality of satellite-based positioning locations; perform weighted summation on the plurality of obtained satellite-based positioning locations according to the respective weights of the plurality of satellite-based positioning locations, to obtain a satellite-based positioning location weighted sum; and take a ratio of the satellite-based positioning location weighted sum to the weight sum as the sample satellite-based positioning location in the set of sample positioning data.

In an embodiment, the constructing module 808 is further configured to calculate, for each set of sample positioning data, a distance difference between the signal distance and the positioning distance; and construct the target function according to the respective distance differences of the plurality of sets of sample positioning data.

In an embodiment, each set of sample positioning data further includes a sample standard bias of sample RTT-based distance measurement and a sample signal-to-noise ratio of the sample satellite-based positioning location. The constructing module 808 is further configured to calculate, for each set of sample positioning data, a sample loss of the sample positioning data according to a reciprocal of the sample standard bias and a reciprocal of the sample signal-to-noise ratio in the sample positioning data, and a square root of the distance difference; and sum the respective sample losses of the plurality of sets of sample positioning data, to obtain the target function.

In an embodiment, the positioning apparatus 800 further includes:

a receiving module, configured to receive a positioning request from a positioning requesting end, the positioning request carrying an access point set scanned by the positioning requesting end and an RTT-based measured distance from the positioning requesting end to each access point in the access point set;

a querying module, configured to query for a fixed bias and a fixed location of at least one access point in the access point set;

a calibrating module, configured to calibrate a corresponding RTT-based measured distance according to the fixed bias of the at least one access point, to obtain a signal distance from the positioning requesting end to the at least one access point; and

a positioning module, configured to position the positioning requesting end based on the signal distance from the positioning requesting end to the at least one access point and the fixed location of the at least one access point.

In an embodiment, the positioning apparatus 800 further includes:

an access point database constructing module, configured to acquire, for each target access point, an access point identifier of the target access point; and correspondingly store the access point identifier, the corresponding fixed bias, and the corresponding fixed location into an access point database.

In an embodiment, the querying module is further configured to determine an intersection set of access point identifiers in the access point set and access point identifiers in the access point database, the intersection set including at least one access point identifier; and query, according to an access point identifier in the intersection set, the access point database for a fixed bias and a fixed location that correspond to the access point identifier.

In an embodiment, the positioning module is configured to take, for each of the at least one access point, a reciprocal of the signal distance obtained after calibration as a weight of the fixed location of the corresponding access point; calculate a weight sum of the respective weights of the at least one access point; perform weighted summation on the corresponding fixed locations according to the respective weights of the fixed locations of the access points, to obtain a location weighted sum; and take a ratio of the location weighted sum to the weight sum as a positioning result of the positioning requesting end.

In an embodiment, the at least one access point includes at least three access points, and the positioning module is configured to draw, for each of the at least three access points, a circle by taking a fixed location of the access point as a center and taking a signal distance obtained after calibration as a radius, to obtain at least three access point circles; and take an intersection area of the at least three access point circles as a positioning result of the positioning requesting end.

According to the positioning apparatus 800, for each target access point, a plurality of sets of sample positioning data constructed based on historical positioning data of a plurality of terminals when the plurality of terminals scans the target access point is acquired, and the plurality of sets of sample positioning data is taken as a data basis for subsequently mining a fixed location of the target access point. Apparently, acquisition of the sample positioning data does not need any additional hardware device or software system, and does not need manual participation, whereby manpower costs of mining an access point location are reduced. To obtain a fixed location and a fixed bias of the target access point, for each set of sample positioning data, a positioning distance determined based on a sample satellite-based positioning location when the terminal scans the target access point and a fixed location to be estimated of the target access point is taken as a supervisory signal, a signal distance determined based on a sample RTT-based measured distance when the terminal scans the target access point and a fixed bias to be estimated of RTT-based distance measurement is taken as an estimated value, a target function about the target access point is constructed, and the fixed location and the fixed bias of the RTT-based distance measurement of the target access point are calculated according to the target function. In this way, the fixed location and the fixed bias of the target access point can be effectively and accurately mined based on existing big data without the need for manual measurement, whereby manpower measurement costs are significantly reduced. The fixed location and the fixed bias are used for a positioning service, such as an indoor positioning service or an outdoor positioning service integrating a satellite positioning result, whereby positioning accuracy can be improved.

In an embodiment, as shown in FIG. 9, a positioning apparatus 900 is provided, which includes: a receiving module 902, a querying module 904, a calibrating module 906, and a positioning module 908.

The receiving module 902 is configured to receive a positioning request from a positioning requesting end, the positioning request carrying an access point set scanned by the positioning requesting end and an RTT-based measured distance from the positioning requesting end to each access point in the access point set.

The querying module 904 is configured to query for a fixed bias of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data including a sample RTT-based measured distance and a sample satellite-based positioning location when a terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample satellite-based positioning location.

The calibrating module 906 is configured to calibrate a corresponding RTT-based measured distance according to the fixed bias of the at least one access point, to obtain a signal distance from the positioning requesting end to the at least one access point.

The positioning module 908 is configured to position the positioning requesting end based on the signal distance from the positioning requesting end to the at least one access point and the fixed location of the at least one access point.

In an embodiment, the positioning apparatus 900 further includes:

an access point database constructing module, configured to acquire, for each target access point, an access point identifier of the target access point; and correspondingly store the access point identifier, the corresponding fixed bias, and the corresponding fixed location into an access point database.

In an embodiment, the querying module 904 is further configured to determine an intersection set of access point identifiers in the access point set and access point identifiers in the access point database, the intersection set including at least one access point identifier; and query, according to an access point identifier in the intersection set, the access point database for a fixed bias and a fixed location that correspond to the access point identifier.

In an embodiment, the positioning module 908 is configured to take, for each of the at least one access point, a reciprocal of the signal distance obtained after calibration as a weight of the fixed location of the corresponding access point; calculate a weight sum of the respective weights of the at least one access point; perform weighted summation on the corresponding fixed locations according to the respective weights of the fixed locations of the access points, to obtain a location weighted sum; and take a ratio of the location weighted sum to the weight sum as a positioning result of the positioning requesting end.

In an embodiment, the at least one access point includes at least three access points, and the positioning module 908 is configured to draw, for each of the at least three access points, a circle by taking a fixed location of the access point as a center and taking a signal distance obtained after calibration as a radius, to obtain at least three access point circles; and take an intersection area of the at least three access point circles as a positioning result of the positioning requesting end.

According to the positioning apparatus 900, after the fixed location and the fixed bias of the target access point are effectively and accurately mined based on existing big data, the fixed location and the fixed bias of the access point may be queried during online positioning. Specifically, a positioning request is received from a positioning requesting end, and the positioning request carries an access point set scanned by the positioning requesting end and an RTT-based measured distance from the positioning requesting end to each access point in the access point set. For the access point set, a fixed bias and a fixed location of at least one access point may be queried based on an earlier accurate mining result of an access point location. A corresponding RTT-based measured distance is calibrated according to the fixed bias of the at least one access point, to obtain a signal distance from the positioning requesting end to the at least one access point. The positioning requesting end may be positioned based on the signal distance from the positioning requesting end to the at least one access point and the fixed location of the at least one access point, whereby positioning accuracy can be improved. Moreover, the positioning method is suitable for positioning in a single access point environment, and is suitable for indoor or outdoor positioning.

All or a part of the modules in the foregoing positioning apparatus may be implemented by using software, hardware, or a combination thereof. The foregoing modules may be built in or independent of a processor of a computer device in a form of hardware, or may be stored in a memory of the computer device in a form of software, for the processor to invoke to perform operations corresponding to the foregoing modules.

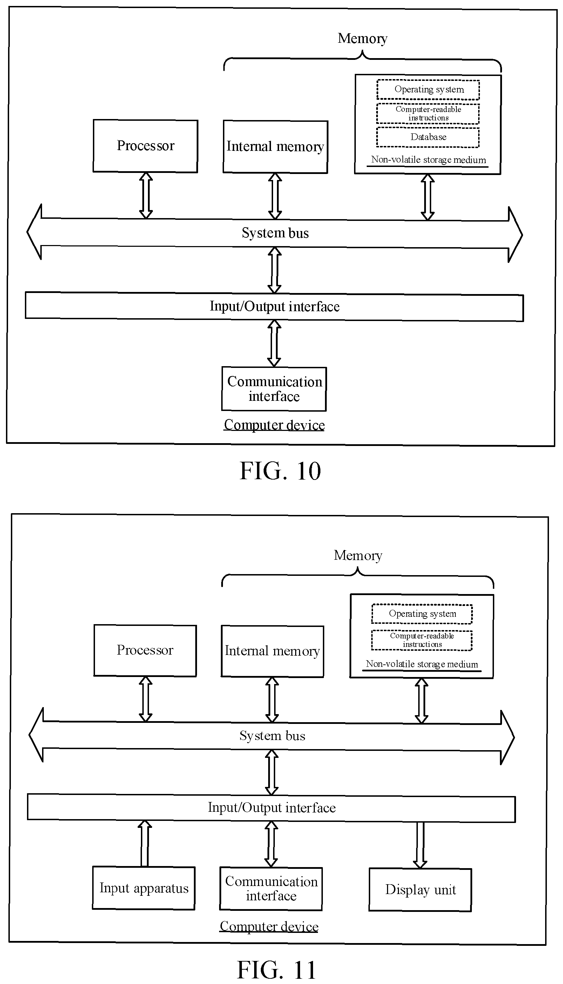

In an embodiment, a computer device is provided. The computer device may be a server, and an internal structure thereof may be as shown in FIG. 10. The computer device includes a processor, a memory, an input/output (I/O) interface, and a communication interface. The processor, the memory, and the I/O interface are connected through a system bus, and the communication interface is connected to the system bus through the I/O interface. The processor of the computer device is configured to provide computation and control ability. The memory of the computer device includes a non-volatile storage medium and an internal memory. The non-volatile storage medium has an operating system, computer-readable instructions, and a database stored therein. The internal memory provides an operating environment for the operating system and the computer-readable instructions in the non-volatile storage medium. The database of the computer device is configured for storing a mined fixed location and a mined fixed bias of an access point. The I/O interface of the computer device is configured to exchange information between the processor and an external device. The communication interface of the computer device is configured to connect and communicate with an external terminal through a network. The computer-readable instructions, when executed by the processor, implement a positioning method.

In an embodiment, a computer device is provided. The computer device may be a terminal or the positioning requesting end mentioned above, and an internal structure thereof may be as shown in FIG. 11. The computer device includes a processor, a memory, an I/O interface, a communication interface, a display unit, and an input apparatus. The processor, the memory, and the I/O interface are connected through a system bus, and the communication interface, the display unit, and the input apparatus are connected to the system bus through the I/O interface. The processor of the computer device is configured to provide computation and control ability. The memory of the computer device includes a non-volatile storage medium and an internal memory. The non-volatile storage medium has an operating system and computer-readable instructions stored therein. The internal memory provides an operating environment for the operating system and the computer-readable instructions in the non-volatile storage medium. The I/O interface of the computer device is configured to exchange information between the processor and an external device. The communication interface of the computer device is configured to communicate with an external terminal in a wired or wireless manner. The wireless manner may be implemented through Wi-Fi, a mobile cellular network, near field communication (NFC), or another technology. The computer-readable instructions, when executed by the processor, implement a positioning method. The display unit of the computer device is configured to form a visual picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, a touchpad, a mouse, or the like.

Those skilled in the art may understand that in the structure shown in FIG. 10 or FIG. 11, only a block diagram of a partial structure related to the solution in this application is shown, and the figure does not constitute a limitation to the computer device to which the solution in this application is applied. Specifically, the computer device may include more or fewer components than those shown in the figure, or some components may be combined, or a different component deployment may be used.

In an embodiment, a computer device is provided, which includes a memory and a processor. The memory has computer-readable instructions stored therein, and the processor, when executing the computer-readable instructions, implement the operations of the positioning method according to any one of the embodiments of this application.

In an embodiment, a computer-readable storage medium is provided, which has computer-readable instructions stored therein. The computer-readable instructions, when executed by a processor, implement the operations of the positioning method according to any one of the embodiments of this application.

In an embodiment, a computer program product is provided, which includes computer-readable instructions. The computer-readable instructions, when executed by a processor, implement the operations of the positioning method according to any one of the embodiments of this application.

User information (including but not limited to, user device information, user personal information, and the like) and data (including but not limited to, data for analysis, stored data, displayed data, and the like) involved in this application are all information and data authorized by users or fully authorized by all parties. Collection, use, and processing of relevant data need to comply with relevant laws, regulations, and standards of relevant countries and regions.

Those of ordinary skill in the art may understand that all or some of the operations of the method according to the foregoing embodiments may be implemented by computer-readable instructions instructing relevant hardware. The computer-readable instructions may be stored in a non-volatile computer-readable storage medium. When the computer-readable instructions are executed, the operations of the method according to the foregoing embodiments may be included. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random-access memory (ReRAM), a magnetoresistive random-access memory (MRAM), a ferroelectric random-access memory (FRAM), a phase change memory (PCM), a graphene memory, and the like. The volatile memory may include a random-access memory (RAM) and an external cache. As an illustration rather than a limitation, the RAM is available in various forms, such as a static random-access memory (SRAM) and a dynamic random-access memory (DRAM). A database involved in the embodiments provided in this application may include at least one of a relational database and a non-relational database. The non-relational database may include, but is not limited to, a blockchain-based distributed database and the like. A processor involved in the embodiments provided in this application may be, but is not limited to, a general-purpose processor, a central processing unit, a graphics processing unit, a digital signal processor, a programmable logic device, a quantum computing-based data processing logic device, or the like.

Technical features of the foregoing embodiments may be combined in different manners to form other embodiments. To make description concise, not all possible combinations of the technical features in the foregoing embodiments are described. However, the combinations of these technical features are considered as falling within the scope recorded by this description provided that no conflict exists.

The foregoing embodiments show only several implementations of this application and are described in detail, which, however, are not to be construed as a limitation to the patent scope of this application. For those of ordinary skill in the art, several transformations and improvements may further be made without departing from the idea of this application. These transformations and improvements fall within the scope of protection of this application. Therefore, the scope of protection of this application is subject to the appended claims.

**Claims**

1. A positioning method, performed by a computer device, and comprising:

   acquiring a plurality of sets of sample positioning data of an access point, each set of sample positioning data comprising a sample round-trip time (RTT)-based measured distance and a sample position of a terminal positioned by a satellite at a time when the terminal scans the access point;
   determining, for each one of the plurality of sets of sample positioning data, a first distance from the terminal to the access point according to an initial bias of the access point and the sample RTT-based measured distance in the each set of sample positioning data, thereby obtaining a first distance set;
   determining, for each set of sample positioning data, a second distance from the terminal to the access point according to an initial location of the access point and the sample position of the terminal positioned by a satellite in the each set of sample positioning data, thereby obtaining a second distance set; and
   determining a target bias of the access point and a target location of the access point according to the first distance set and the second distance set, the target bias and the target location being configured to position the terminal.

2. The method according to claim 1, wherein an operation of determining each set of sample positioning data of the access point comprises:

   acquiring a plurality of pieces of positioning data from a plurality of times of historical positioning of the terminal within a preset time, the positioning data from each time of historical positioning comprising: a position of the terminal positioned by a satellite when the terminal scans the access point and a signal-to-noise ratio of a satellite signal, as well as an RTT-based measured distance from the terminal to the access point and a standard bias of RTT-based distance measurement;
   performing weighted averaging on the plurality of obtained RTT-based measured distances according to the plurality of standard biases of RTT-based distance measurement in the plurality of pieces of positioning data, to obtain a sample RTT-based measured distance in a set of sample positioning data; and
   performing weighted averaging on the plurality of obtained positions of the terminal positioned by a satellite according to the plurality of signal-to-noise ratios of satellite signals in the plurality of pieces of positioning data, to obtain a sample position of the terminal positioned by a satellite in the set of sample positioning data.

3. The method according to claim 2, wherein the performing weighted averaging on the plurality of obtained RTT-based measured distances according to the plurality of standard biases of RTT-based distance measurement in the plurality of pieces of positioning data, to obtain a sample RTT-based measured distance in a set of sample positioning data comprises:

taking a reciprocal of the standard bias of the RTT-based distance measurement in each piece of positioning data as a weight of the corresponding RTT-based measured distance;

summing the respective weights of the plurality of RTT-based measured distances, to obtain a weight sum;

performing weighted summation on the plurality of obtained RTT-based measured distances according to the respective weights of the plurality of RTT-based measured distances, to obtain an RTT-based measured distance weighted sum; and

taking a ratio of the RTT-based measured distance weighted sum to the weight sum as the sample RTT-based measured distance in the set of sample positioning data.

4. The method according to claim 2, wherein the performing weighted averaging on the plurality of obtained positions of the terminal positioned by a satellite according to the plurality of signal-to-noise ratios of satellite signals in the plurality of pieces of positioning data, to obtain a sample satellite-based positioning location in the set of sample positioning data comprises:

taking a reciprocal of the signal-to-noise ratio of the satellite signal in each piece of positioning data as a weight of a corresponding position of the terminal positioned by a satellite;

summing the respective weights of the plurality of positions of the terminal positioned by a satellite, to obtain a weight sum;

performing weighted summation on the plurality of obtained positions of the terminal positioned by a satellite according to the respective weights of the plurality of positions of the terminal positioned by a satellite, to obtain a weighted sum of positions of the terminal positioned by a satellite; and

taking a ratio of the weighted sum of positions of the terminal positioned by a satellite to the weight sum as the sample position of the terminal positioned by a satellite in the set of sample positioning data.

5. The method according to any one of claims 1 to 4, wherein the determining a target bias of the access point and a target location of the access point according to the first distance set and the second distance set comprises: constructing a target function about the target access point according to the first distance set and the second distance set respectively determined based on the plurality of sets of sample positioning data; and estimating a target bias of the access point and a target location of the access point according to the target function;

wherein the constructing a target function about the access point according to the first distance set and the second distance set respectively determined based on the plurality of sets of sample positioning data comprises:

calculating, for each set of sample positioning data, a distance difference between the first distance and the second distance; and

constructing the target function according to the respective distance differences of the plurality of sets of sample positioning data.

6. The method according to claim 5, wherein each set of sample positioning data further comprises a sample standard bias of sample RTT-based distance measurement and a sample signal-to-noise ratio of the sample position of the terminal positioned by a satellite; and the constructing the target function according to the respective distance differences of the plurality of sets of sample positioning data comprises:

calculating, for each set of sample positioning data, a sample loss of the sample positioning data according to a reciprocal of the sample standard bias and a reciprocal of the sample signal-to-noise ratio in the sample positioning data, and a square root of the distance difference; and

summing the respective sample losses of the plurality of sets of sample positioning data, to obtain the target function.

7. The method according to any one of claims 1 to 6, further comprising:

receiving a positioning request from a positioning requesting end, the positioning request carrying an access point set scanned by the positioning requesting end and an RTT-based measured distance from the positioning requesting end to each access point in the access point set;

querying for a fixed bias of RTT-based distance measurement of at least one access point in the access point set and a fixed location of the at least one access point;

calibrating a corresponding RTT-based measured distance according to the fixed bias of the RTT-based distance measurement of the at least one access point, to obtain a signal distance from the positioning requesting end to the at least one access point; and

positioning the positioning requesting end based on the signal distance from the positioning requesting end to the at least one access point and the fixed location of the at least one access point.

8. A positioning method, performed by a computer device, and comprising:

receiving a positioning request from a positioning requesting end, the positioning request carrying an access point set scanned by the positioning requesting end and an RTT-based measured distance from the positioning requesting end to each access point in the access point set;

querying for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data comprising a sample RTT-based measured distance and a sample position of a terminal positioned by a satellite when the terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample position of a terminal positioned by a satellite;

calibrating a corresponding RTT-based measured distance according to the fixed bias of the at least one access point, to obtain a signal distance from the positioning requesting end to the at least one access point; and

positioning the positioning requesting end based on the signal distance from the positioning requesting end to the at least one access point and the fixed location of the at least one access point.

9. The method according to claim 8, before the receiving a positioning request from a positioning requesting end, further comprising:

acquiring, for each access point, an access point identifier of the access point; and

correspondingly storing the access point identifier, the corresponding fixed bias, and the corresponding fixed location into an access point database.

10. The method according to claim 8 or 9, wherein the querying for a fixed bias of RTT-based distance measurement of at least one access point in the access point set and a fixed location of the at least one access point comprises:

determining an intersection set of access point identifiers in the access point set and access point identifiers in the access point database, the intersection set comprising at least one access point identifier; and

querying, according to an access point identifier in the intersection set, the access point database for a fixed bias and a fixed location that correspond to the access point identifier.

11. The method according to any one of claims 8 to 10, wherein the positioning the positioning requesting end based on the signal distance from the positioning requesting end to the at least one access point and the fixed location of the at least one access point comprises:

taking, for each of the at least one access point, a reciprocal of the signal distance obtained after calibration as a weight of the fixed location of the corresponding access point;

summing the respective weights of the at least one access point, to obtain a weight sum;

performing weighted summation on the corresponding fixed locations according to the respective weights of the fixed locations of the access points, to obtain a location weighted sum; and

taking a ratio of the location weighted sum to the weight sum as a positioning result of the positioning requesting end.

12. The method according to any one of claims 8 to 10, wherein the at least one access point comprises at least three access points, and the positioning the positioning requesting end based on the signal distance from the positioning requesting end to the at least one access point and the fixed location of the at least one access point comprises:

drawing, for each access point in the at least three access points, a circle by taking a fixed location of the access point as a center and taking a signal distance obtained after calibration as a radius, to obtain at least three access point circles; and

taking an intersection area of the at least three access point circles as a positioning result of the positioning requesting end.

13. A positioning apparatus, comprising:

an acquiring module, configured to acquire a plurality of sets of sample positioning data of a access point, each set of sample positioning data comprising a sample RTT-based measured distance and a sample position of a terminal positioned by a satellite at a time when the terminal scans the access point;

a first determining module, configured to determine, for each one of the plurality of sets of sample positioning data, a first distance from the terminal to the access point according to an initial bias of the access point and the sample RTT-based measured distance in the each set of sample positioning data, thereby obtaining a first distance set;

a second determining module, configured to determine, for each set of sample positioning data, a second distance from the terminal to the access point according to an initial location of the access point and the sample position of the terminal positioned by a satellite in the each set of sample positioning data, thereby obtaining a second distance set;

a constructing module, configured to construct a target function about the access point according to the first distance set and the second distance set respectively determined based on the plurality of sets of sample positioning data; and

an access point mining module, configured to determine a target bias of the access point and a target location of the access point according to the first distance set and the second distance set, the target bias and the target location being configured to position the terminal.

14. A positioning apparatus, comprising:

a receiving module, configured to receive a positioning request from a positioning requesting end, the positioning request carrying an access point set scanned by the positioning requesting end and an RTT-based measured distance from the positioning requesting end to each access point in the access point set;

a querying module, configured to query for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data comprising a sample RTT-based measured distance and a sample position of a terminal positioned by a satellite when the terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample position of a terminal positioned by a satellite;

a calibrating module, configured to calibrate a corresponding RTT-based measured distance according to the fixed bias of the at least one access point, to obtain a signal distance from the positioning requesting end to the at least one access point; and

a positioning module, configured to position the positioning requesting end based on the signal distance from the positioning requesting end to the at least one access point and the fixed location of the at least one access point.

15. A computer device, comprising a memory and a processor, the memory having computer-readable instructions stored therein, and the processor, when executing the computer-readable instructions, implementing the operations of the method according to any one of claims 1 to 12.

16. A computer-readable storage medium, having computer-readable instructions stored therein, the computer-readable instructions, when executed by a processor, implementing the operations of the method according to any one of claims 1 to 12.

17. A computer program product, comprising computer-readable instructions, the computer-readable instructions, when executed by a processor, implementing the operations of the method according to any one of claims 1 to 12.

FIG. 1

202

Acquire a plurality of sets of sample positioning data of a target access point, each set of sample positioning data including a sample round-trip time (RTT)-based measured distance and a sample satellite-based positioning location when a terminal scans the target access point

204

Determine, for each set of sample positioning data, a signal distance from the terminal to the target access point according to a fixed bias to be estimated of RTT-based distance measurement of the target access point and the sample RTT-based measured distance in the sample positioning data

206

Determine, for each set of sample positioning data, a positioning distance from the terminal to the target access point according to a fixed location to be estimated of the target access point and the sample satellite-based positioning location in the sample positioning data

208

Construct a target function about the target access point according to the signal distances and the positioning distances respectively determined based on the plurality of sets of sample positioning data

210

Estimate a fixed bias of the RTT-based distance measurement of the target access point and a fixed location of the target access point according to the target function, the estimated fixed bias and the estimated fixed location being configured for positioning the terminal

## FIG. 2

302

Acquire a plurality of pieces of positioning data from a plurality of times of historical positioning of a terminal within a preset time, the positioning data from each time of historical positioning including: a satellite-based positioning location when the terminal scans a target access point and a signal-to-noise ratio of a satellite signal, as well as a round-trip time (RTT)-based measured distance from the terminal to the target access point and a standard bias of RTT-based distance measurement

304

Perform weighted averaging on the plurality of obtained RTT-based measured distances according to the plurality of standard biases of RTT-based distance measurement in the plurality of pieces of positioning data, to obtain a sample RTT-based measured distance in a set of sample positioning data

306

Perform weighted averaging on the plurality of obtained satellite-based positioning locations according to the plurality of signal-to-noise ratios of satellite signals in the plurality of pieces of positioning data, to obtain a sample satellite-based positioning location in the set of sample positioning data

## FIG. 3

Collect a positioning request

Mine a fixed location and a fixed bias

Construct an access point database

$WIFI_1(x_1, y_1, o_1,)$

$WIFI_2(x_2, y_2, o_2,)$

...

$WIFI_N(x_N, y_N, o_N,)$

FIG. 4

FIG. 5

Acquire a positioning request from a positioning requesting end

|  | $WIFI_1$ | $WIFI_2$ | ... | $WIFI_M$ |
|---|---|---|---|---|
| Round-trip time-based distance measurement | $r_1$ | $r_2$ | ... | $r_M$ |
| Standard bias | $s_1$ | $s_2$ | ... | $s_M$ |

Weighted centroid Positioning algorithm

Location determination

(x, y)

FIG. 6

702

Receive a positioning request from a positioning requesting end, the positioning request carrying an access point set scanned by the positioning requesting end and a round-trip time (RTT)-based measured distance from the positioning requesting end to each access point in the access point set

704

Query for a fixed bias of RTT-based distance measurement of at least one access point in the access point set and a fixed location of the at least one access point, a fixed bias of RTT-based distance measurement of an access point and a fixed location of the access point being estimated according to a target function about the access point, the target function being constructed according to signal distances and positioning distances respectively determined based on a plurality of sets of sample positioning data of the access point, each set of sample positioning data including a sample RTT-based measured distance and a sample satellite-based positioning location when a terminal scans the access point, the signal distance being determined according to a fixed bias to be estimated of the RTT-based distance measurement of the access point and the sample RTT-based measured distance, and the positioning distance being determined according to a fixed location to be estimated of the access point and the sample satellite-based positioning location

706

Calibrate a corresponding RTT-based measured distance according to the fixed bias of the at least one access point, to obtain a signal distance from the positioning requesting end to the at least one access point

708

Position the positioning requesting end based on the signal distance from the positioning requesting end to the at least one access point and the fixed location of the at least one access point

FIG. 7

Positioning apparatus 800

Acquiring module 802

First determining module 804

Second determining module 806

Constructing module 808

Access point mining module 810

FIG. 8

Positioning apparatus 900

Receiving module 902

Querying module 904

Calibrating module 906

Positioning module 908

FIG. 9

FIG. 10

FIG. 11

# INTERNATIONAL SEARCH REPORT

| International application No. |
|---|
| **PCT/CN2023/129411** |

## A. CLASSIFICATION OF SUBJECT MATTER

G01S5/02(2010.01)i

According to International Patent Classification (IPC) or to both national classification and IPC

## B. FIELDS SEARCHED

Minimum documentation searched (classification system followed by classification symbols)

IPC:G01S5/-

Documentation searched other than minimum documentation to the extent that such documents are included in the fields searched

Electronic data base consulted during the international search (name of data base and, where practicable, search terms used)

CNTXT, ENTXTC, CNKI, DWPI: 腾讯, 定位, 接入点, 无线, 往返时间, 卫星定位, 距离, 测距, 函数, 位置, 偏差, 误差, 坐标; locat+, coordinate?, posit+, AP?, WIFI, RTT, SPS, GPS, GNSS, distance, measur+, detect+, function, bias, error

## C. DOCUMENTS CONSIDERED TO BE RELEVANT

| Category* | Citation of document, with indication, where appropriate, of the relevant passages | Relevant to claim No. |
|---|---|---|
| A | US 2009264137 A1 (QUALCOMM INC.) 22 October 2009 (2009-10-22) description, paragraphs 19-65, and figures 1-6 | 1-17 |
| A | CN 104396322 A (QUALCOMM INC.) 04 March 2015 (2015-03-04) entire document | 1-17 |
| A | CN 106054129 A (QUALCOMM INC.) 26 October 2016 (2016-10-26) entire document | 1-17 |
| A | CN 114938514 A (SHENZHEN SUNDRAY TECHNOLOGIES CO., LTD.) 23 August 2022 (2022-08-23) entire document | 1-17 |
| A | US 2010135178 A1 (QUALCOMM INC.) 03 June 2010 (2010-06-03) entire document | 1-17 |
| A | US 2021321219 A1 (HERE GLOBAL B.V.) 14 October 2021 (2021-10-14) entire document | 1-17 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/129411** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022081121 A1 (HEWLETT-PACKARD DEVELOPMENT COMPANY, L.P.) 21 April 2022 (2022-04-21) <br> entire document | 1-17 |

Form PCT/ISA/210 (second sheet) (July 2022)

**INTERNATIONAL SEARCH REPORT**
Information on patent family members

International application No.

**PCT/CN2023/129411**

| Patent document cited in search report | | | Publication date (day/month/year) | Patent family member(s) | | | Publication date (day/month/year) |
|---|---|---|---|---|---|---|---|
| US | 2009264137 | A1 | 22 October 2009 | JP | 2011523454 | A | 11 August 2011 |
| | | | | JP | 5587292 | B2 | 10 September 2014 |
| | | | | WO | 2009132038 | A1 | 29 October 2009 |
| | | | | US | 8364166 | B2 | 29 January 2013 |
| | | | | KR | 20110002866 | A | 10 January 2011 |
| | | | | KR | 101227820 | B1 | 29 January 2013 |
| | | | | EP | 2288929 | A1 | 02 March 2011 |
| CN | 104396322 | A | 04 March 2015 | JP | 2015525340 | A | 03 September 2015 |
| | | | | KR | 20150018827 | A | 24 February 2015 |
| | | | | WO | 2013176998 | A2 | 28 November 2013 |
| | | | | US | 2013307723 | A1 | 21 November 2013 |
| | | | | US | 9432964 | B2 | 30 August 2016 |
| | | | | EP | 2853122 | A2 | 01 April 2015 |
| CN | 106054129 | A | 26 October 2016 | EP | 1960805 | A2 | 27 August 2008 |
| | | | | EP | 1960805 | B1 | 14 June 2017 |
| | | | | JP | 2009515201 | A | 09 April 2009 |
| | | | | JP | 5726402 | B2 | 03 June 2015 |
| | | | | WO | 2007056738 | A2 | 18 May 2007 |
| | | | | JP | 2012105311 | A | 31 May 2012 |
| | | | | JP | 5474923 | B2 | 16 April 2014 |
| | | | | JP | 2014090451 | A | 15 May 2014 |
| | | | | KR | 20080074971 | A | 13 August 2008 |
| | | | | KR | 101071076 | B1 | 10 October 2011 |
| | | | | KR | 20100084691 | A | 27 July 2010 |
| | | | | KR | 101031205 | B1 | 27 April 2011 |
| | | | | JP | 2015200657 | A | 12 November 2015 |
| | | | | JP | 6100306 | B2 | 22 March 2017 |
| | | | | EP | 2333575 | A2 | 15 June 2011 |
| | | | | EP | 2333575 | B1 | 02 October 2019 |
| | | | | EP | 2891896 | A1 | 08 July 2015 |
| CN | 114938514 | A | 23 August 2022 | | None | | |
| US | 2010135178 | A1 | 03 June 2010 | EP | 2527861 | A2 | 28 November 2012 |
| | | | | WO | 2010059934 | A2 | 27 May 2010 |
| | | | | EP | 2368131 | A2 | 28 September 2011 |
| | | | | EP | 2368131 | B1 | 19 December 2012 |
| | | | | EP | 2600165 | A1 | 05 June 2013 |
| | | | | EP | 2600165 | B1 | 30 July 2014 |
| | | | | US | 2013237246 | A1 | 12 September 2013 |
| | | | | JP | 2014139568 | A | 31 July 2014 |
| | | | | JP | 5976703 | B2 | 24 August 2016 |
| | | | | KR | 20110089431 | A | 08 August 2011 |
| | | | | KR | 101340788 | B1 | 11 December 2013 |
| | | | | US | 2013223261 | A1 | 29 August 2013 |
| | | | | US | 9213082 | B2 | 15 December 2015 |
| | | | | JP | 2013167630 | A | 29 August 2013 |
| | | | | EP | 2527860 | A2 | 28 November 2012 |
| | | | | EP | 2746802 | A1 | 25 June 2014 |
| | | | | EP | 2746802 | B1 | 25 July 2018 |
| | | | | JP | 2012509483 | A | 19 April 2012 |
| | | | | KR | 20120127526 | A | 21 November 2012 |

Form PCT/ISA/210 (patent family annex) (July 2022)

**INTERNATIONAL SEARCH REPORT**
Information on patent family members

International application No.

**PCT/CN2023/129411**

| Patent document cited in search report | | | Publication date (day/month/year) | Patent family member(s) | | | Publication date (day/month/year) |
|---|---|---|---|---|---|---|---|
| | | | | KR | 101312896 | B1 | 30 September 2013 |
| US | 2021321219 | A1 | 14 October 2021 | EP | 3893016 | A1 | 13 October 2021 |
| WO | 2022081121 | A1 | 21 April 2022 | TW | 202218463 | A | 01 May 2022 |
| | | | | TWI | 807373 | B | 01 July 2023 |

**EP 4 636 431 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310126956